# EUROPEAN PATENT APPLICATION

(11) **EP 2 508 240 A2**
(43) Date of publication of application: **10.10.2012**
(21) Application number: 10834749.3
(22) Date of filing: 25.11.2010
(51) Int. Cl.: B01D 33/052, B01D 39/00, B01D 35/00

(54) **HORIZONTAL RODS-SUPPORTED PORE-CONTROLLABLE FIBER MEDIA FILTER, AND HORIZONTAL RODS-SUPPORTED FIBER FILTRATION DEVICE**

(30) Priority: 03.12.2009 KR 20090119222
(71) Applicant: Kim, Kyu Tae, Busan 614-090 (KR)
(72) Inventor: Kim, Kyu Tae, Busan 614-090 (KR)
(74) Representative: Iskender, Ibrahim
(86) International application number: PCT/KR2010/008412
(87) International publication number: WO 2011/068334

(57) **Abstract**

The present invention relates to a horizontal rod-supported, pore-controllable fiber media filter comprising: a fiber support comprising fixing supports to stand at both sides thereof and a plurality of horizontal rods which are coupled rotatably to the fixing supports in a zigzag pattern at intervals in a lengthwise direction of the fixing supports; a fiber media which hangs on the horizontal rods of the fiber support in a zigzag pattern, in which the lower end of the fiber media forms a fixed end attached to the lower end of the fiber support, and the upper end of the fiber media forms a free end at the upper end of the fiber support; and an actuator which is coupled to the free end of the fiber media to pull or relax the fiber media supported by the fixed end.

## Description

### Technical Field

The present invention relates to a horizontal rod-supported, pore-controllable fiber media filter comprising: a fiber support comprising fixing supports to stand at both sides thereof and a plurality of horizontal rods, both ends of which are coupled to the fixing supports at intervals in the lengthwise direction; a fiber media which hangs on the horizontal rods of the fiber support in a zigzag pattern, in which the lower end of the fiber media forms a fixed end attached to the lower end of the fiber support, and the upper end of the fiber media forms a free end at the upper end of the fiber support; and an actuator which is coupled to the free end of the fiber media to pull or relax the fiber media supported by the fixed end, wherein, when the actuator is driven to pull the fiber media, the fiber media forms filtration pores while being supported by the horizontal rods of the fiber support in a zigzag pattern, and when the actuator is driven to relax the fiber media, the fiber media is relaxed in a zigzag pattern to form backwashing pores.

### Background Art

Generally, water pollution is a state of water wherein pollutants have been discharged into natural waters so as to exceed the self-purification capacity of water so that the natural waters cannot self-purify the influent pollutants by physicochemical and biological action.

Generally, factories, power plants, sewage disposal plants and the like are stationary water pollution sources which discharge pollutants into lakes or rivers, and cultivated lands, forests, cities, suburbs, roads, parking lots, car washes and the like are non-stationary water pollution sources, which discharge various pollutants, including precipitates, insecticides, asbestos, fertilizers, heavy metals, salts, oils, waste, etc.

In order to prevent water pollution, these water pollution sources are provided with water treatment systems which utilize water filtration processes.

In the filtration process, raw water containing suspended solids (SS) is passed through a filtration system to discharge treated water from which the suspended solids were removed. Specifically, the suspended solids in raw water are captured in the pores of the filter layer of the filtration system by complex mechanisms such as sieving, precipitation, inertial impaction, isolation, adsorption or flocculation, and only clean water is discharged as treated water.

If the filtration process continues, the pores of the filter layer will be gradually filled with suspended solids, and the filtration resistance of the filter layer will increase such that the filtration process will no longer continue. In this case, a backwashing process is required in which clean washing water and air are injected to eliminate suspended solids captured in the pores.

The filtration processes are broadly classified according to the presence or absence of an inflow pump into a pressure type and a gravity type. In addition, these filtration processes are classified according to the kind of filter media into sand filters, mesh screen filters, fiber filters, membranes and the like.

The filters can slightly differ depending on the backwashing process, but a general method uses backwashing air and water. When the filter medium is seriously polluted, it should be chemically cleaned or replaced. Thus, the filters have different characteristics depending on the filter media, filtration, and the backwashing process, but the factors that most strongly determine the performance of the filters are whether the filters satisfy water quality standards with low cost and low energy and whether initial filtration conditions are restored by effective backwashing.

Generally, in the technical field of filters, the filtration process of filtering raw water is strictly distinguished from the backwashing process of backwashing the filters.

The technical field of filters has been developed because of the interest in efficiently improving the filtration process and the backwashing process together with an interest in the favorable and efficient switching between the filtration process and the backwashing process.

These interests in the technical field of filters still exist, and thus, in the field of filtration capacity, there is a need to develop technology for increasing filtration capacity while more efficiently controlling the filter pores. In addition in the field of switching between the processes, there is a need to develop technology which there is no trouble even when the switch between processes periodically takes place, and which reduces maintenance cost.

For automated processes which use the filters, technology has been continuously developed which increases filtration capacity while using fiber filter media having high filtration efficiency and pores which are easy to control. Korean Patent Registration No. 10-0476851 has great significance as a technology that satisfies such requirements.

In the above patent, controlling the pores of the fiber media is done by pressing or relaxing the fiber media using a plate-shaped strainer as a support.

In this prior art, in the case of small-sized strainers, controlling the pores of the fiber media is easily operated. However, in the case in which the area of the fiber media is increased in order to increase the filtration capacity of the filter, the tension of the fiber media does not reach the central portion thereof, and thus the central portion of the fiber media crumples and cracks due to water pressure and suspended solids, thus damaging the filter layer while reducing the filtration capacity.

In addition, methods capable of increasing the filtration capacity of a filter media in a limited area of a filter chamber are limited, and a method that overcomes this problem has been in continuous demand.

### Disclosure

### Technical Problem

Accordingly, the present invention has been made in order to solve the above problems occurring in the prior art, and an object of the present invention is to provide a horizontal rod-supported, pore-controllable fiber media filter and a horizontal rod-supported fiber filter system, in which filtration capacity is increased while controlling filtration pores more efficiently, and in which a filtration process and a backwashing process are freely switched thererbetween, and particularly in which the fiber media that determines filtration capacity remains stably attached even when the area of the fiber media is increased.

### Technical Solution

In order to accomplish the above object(s), the present invention provides a horizontal rod-supported, pore-controllable fiber media filter comprising: a fiber support comprising fixing supports to stand at both sides thereof and a plurality of horizontal rods, both ends of which are coupled to the fixing supports at intervals in the lengthwise direction; a fiber media which hangs on the horizontal rods of the fiber support in a zigzag pattern, in which the lower end of the fiber media forms a fixed end attached to the lower end of the fiber support, and the upper end of the fiber media forms a free end at the upper end of the fiber support; and an actuator which is coupled to the free end of the fiber media to pull or relax the fiber media supported by the fixed end, wherein, when the actuator is driven to pull the fiber media, the fiber media forms filtration pores while being supported by the horizontal rods of the fiber support in a zigzag pattern, and when the actuator is driven to relax the fiber media, the fiber media is relaxed in a zigzag pattern to form backwashing pores.

In the present invention, the plurality of horizontal rods are preferably coupled to the fixing supports in a zigzag pattern, such that the filtration capacity of the filter media filter is determined by controlling the hanging length of the fiber media.

Also, the horizontal rods of the fiber support are rotatably coupled to the fixing supports such that a support frictional force caused by the pulling and relaxation of the fiber media is absorbed into rotational motion.

Moreover, the horizontal rod-supported, pore-controllable fiber media filter is preferably configured into a fiber media filter module wherein a pair of the fiber supports having the fiber media hanging thereon are symmetrically placed or placed in a line at regular intervals, and the upper end of the fiber media is coupled to an upper coupling cover connected with the actuator, and a drainage port is formed at the central portion of the lower end of the fiber media.

In addition, the fiber media filter module is preferably configured into a multi-stage filter module having a multi-layer fiber membrane by symmetrically placing a plurality of pairs of the fiber supports having the fiber media hanging thereon, or placing them in a line at regular intervals.

Furthermore, the thickness of the fiber media of the symmetrical or continuous fiber supports in the multi-stage filter module differs between the pairs of the fiber supports so as to show a deep filtration effect.

In another aspect, the present invention provides a horizontal rod-supported fiber filter system comprising: a filtration chamber comprising a raw water inlet pipe formed at the upper end of one side of the chamber, a backwashing water discharge pipe separate from the raw water inlet pipe and formed at the upper end of one side of the chamber, and a filtered-water drainage tub that is formed at the lower end of the chamber so as to communicate with the upper end of a filtered-water discharge pipe; a fiber media filter module which is placed in the filtration chamber so as to couple an actuator to the upper end of the filtration chamber and couple a drainage port to communicate with the filtered-water discharge pipe, such that raw water introduced into the filter chamber is filtered through the fiber media and then discharged through the drainage port; an air injection pipe which is placed in the filtered-water drainage tub, has a plurality of branch pipes facing the fiber media filter module, and is connected with an external air pump so as to inject backwashing air according to a control signal; and a drainage pipe which is connected to the filtered-water drainage tub so as to discharge filtered water or introduce backwashing water according to a control signal.

Herein, the branch pipes of the air injection pipe are preferably arranged so as to inject air onto both sides of the fiber media.

Also, in the horizontal rod-supported fiber filter system, a plurality of the fiber media filter modules are arranged in the filtration chamber.

In addition, the horizontal rod-supported fiber filter system further comprises: a raw water inlet pipe control valve for opening or closing the raw water inlet pipe; a backwashing water discharge pipe control valve for opening or closing the backwashing water discharge pipe; a water quality measurement sensor which is placed in the filtration chamber in order to measure the degree of pollution of raw water or filtered water; and a control unit which generates signals for controlling the driving of the raw water inlet pipe control valve, the backwashing water discharge control valve, the actuator, the drainage pipe and the air injection pipe, according to the internal conditions of the filtration chamber, which are input through the water quality measurement sensor, so as to perform a filtration or backwashing process, whereby the horizontal rod-supported fiber filter system is automatically controlled so as to satisfy water quality standards set in the control unit.

In another aspect, the present invention provides a horizontal rod-supported fiber filter system comprising: a filtration chamber comprising a raw water inlet pipe provided at the upper end of one side of the chamber, a backwashing water discharge pipe which is separate from the raw water inlet pipe and formed at the upper end of one side of the chamber, and a filtered-water drainage tub which is placed on one sidewall of the chamber so as to communicate with a filtered-water discharge pipe; a fiber media filter module which is placed in the filtration chamber so as to couple an actuator to the upper end of the filtration chamber and couple a drainage port to communicate with the filtered-water discharge pipe, such that raw water introduced into the filter chamber is filtered through the fiber media and then discharged through the drainage port; an air injection pipe which is placed in the filtered-water drainage tub, has a plurality of branch pipes facing the fiber media filter module, and is connected with an external air pump so as to inject backwashing air according to a control signal; a drainage pipe which is connected to the filtered-water drainage tub so as to discharge filtered water or introduce backwashing water according to a control signal; and a bottom air injection pipe which is placed at the bottom of the filtration chamber, has a plurality of bottom branch pipes facing the fiber media filter module, and is connected with an external air pump.

Herein, in the horizontal rod-supported fiber filter system, a plurality of the fiber media filter modules are preferably arranged in a layer structure in the filtration chamber.

In addition, the horizontal rod-supported fiber filter system further comprises: a raw water inlet pipe control valve for opening or closing the raw water inlet pipe; a backwashing water discharge pipe control valve for opening or closing the backwashing water discharge pipe; a water quality measurement sensor which is placed in the filtration chamber in order to measure the degree of pollution of raw water or filtered water; and a control unit which generates signals for controlling the driving of the raw water inlet pipe control valve, the backwashing water discharge control valve, the actuator, the drainage pipe, the air injection pipe and the bottom air injection pipe, according to the internal conditions of the filtration chamber, which are input through the water quality measurement sensor, so as to perform a filtration or backwashing process, whereby the horizontal rod-supported fiber filter system is automatically controlled so as to satisfy water quality standards set in the control unit.

### Advantageous Effects

According to the present invention, there are provided a horizontal rod-supported, pore-controllable fiber media filter and a horizontal rod-supported fiber filter system, in which filtration capacity is increased while filtration pores are more efficiently controlled, and in which a filtration process and a backwashing process are freely switched therebetween, and particularly in which the fiber media that determines filtration capacity remains stably attached even when the area of the fiber media is increased.

### Description of Drawings

FIG. 1 is a side cross-sectional view showing the structure of a horizontal rod-supported, pore-controllable fiber media filter according to the present invention.
FIG. 2 illustrates another embodiment of a horizontal rod-supported, pore-controllable fiber media filter according to the present invention.
FIG. 3 is a front view of a horizontal rod-supported, pore-controllable fiber media filter according to the present invention.
FIG. 4 is a side cross-sectional view showing the structure of a fiber media filter module formed by horizontal rod-supported, pore-controllable fiber media filters according to the present invention.
FIG. 5 is a side cross-sectional view showing the structure of a horizontal rod-supported fiber filter system of the present invention in a filtration process.
FIG. 6 is a side cross-sectional view showing the structure of a horizontal rod-supported fiber filter system of the present invention in a backwashing process.
FIGS. 7 to 9 are side cross-sectional views showing the structure of a horizontal rod-supported fiber filter system according to another embodiment of the present invention.
FIG. 10 shows the control structure of a horizontal rod-supported fiber filter system according to the present invention.

### <Description of the Reference Numerals in the Drawings>

6: actuator; 8: coupling cover;
9: fiber media; A: fixed end; B: free end;
11: drainage port; 10: fiber media filter module;
10-1: multi-stage fiber media filter module;
5: horizontal rods; 50: fixing supports;
51: fixing pin; 500: fiber support;
20: filtered-water drainage tub; 22: drainage water;
30: air injection pipe; 40: control unit;
60: water quality measurement sensor;
100: filtration chamber; 110: raw water inlet pipe;
111: raw water inlet pipe control valve;
120: filtered-water discharge pipe;
220: backwashing water discharge pipe;
221: backwashing water discharge pipe control valve.

### Best Mode

Hereinafter, the present invention will be described with reference to the accompanying drawings. When it is determined that the detailed description of the related art may unnecessarily obscure the subject matter of the present invention, the description thereof will be omitted.

Further, the following terms, which are defined in consideration of functions of the present invention, may be altered depending on the users' intentions or judicial precedents. Therefore, the meaning of each term should be interpreted based on the entire disclosure of the specification.

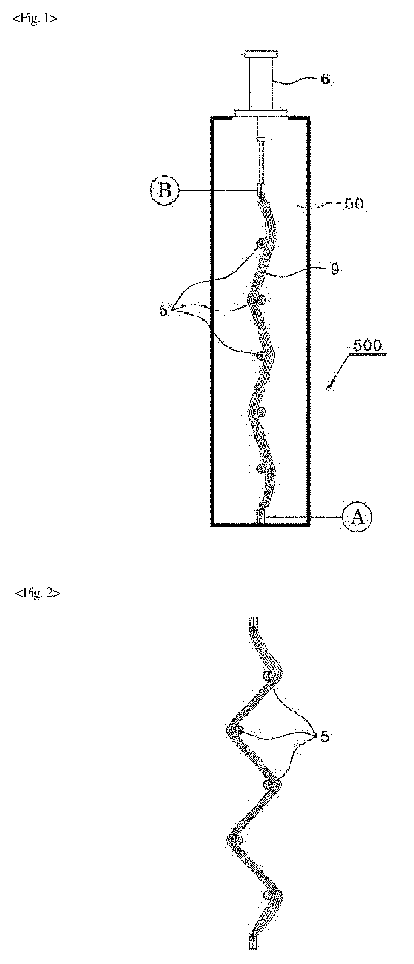

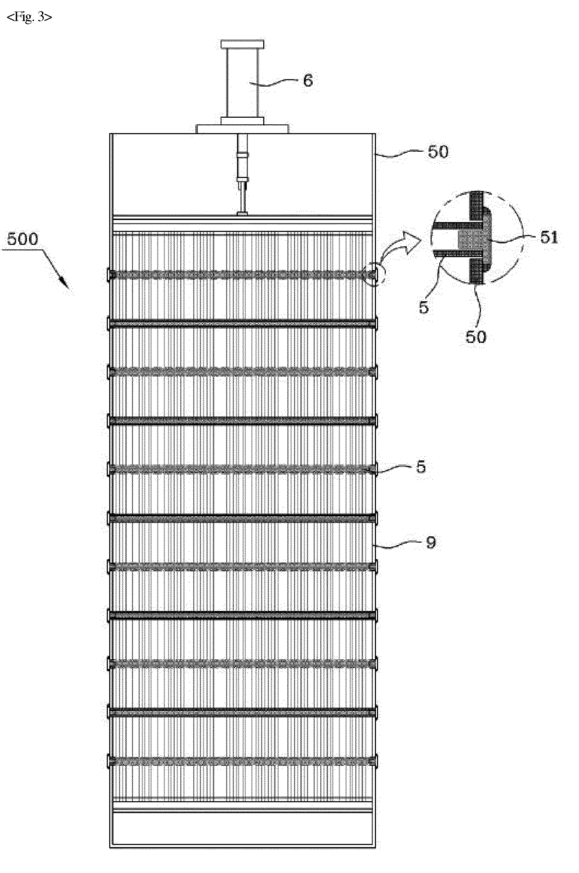

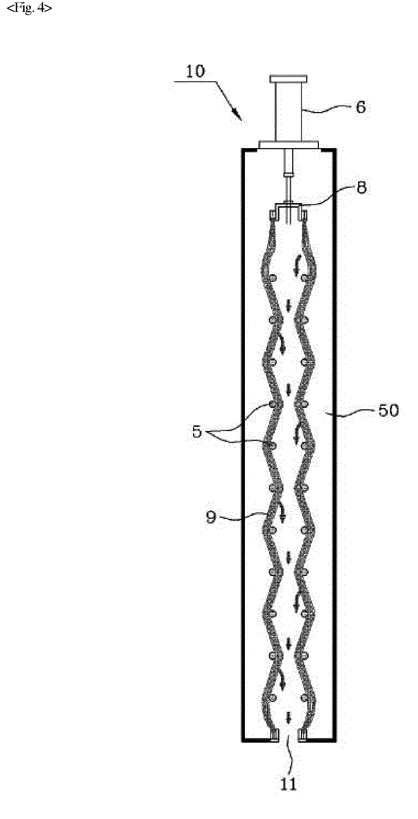

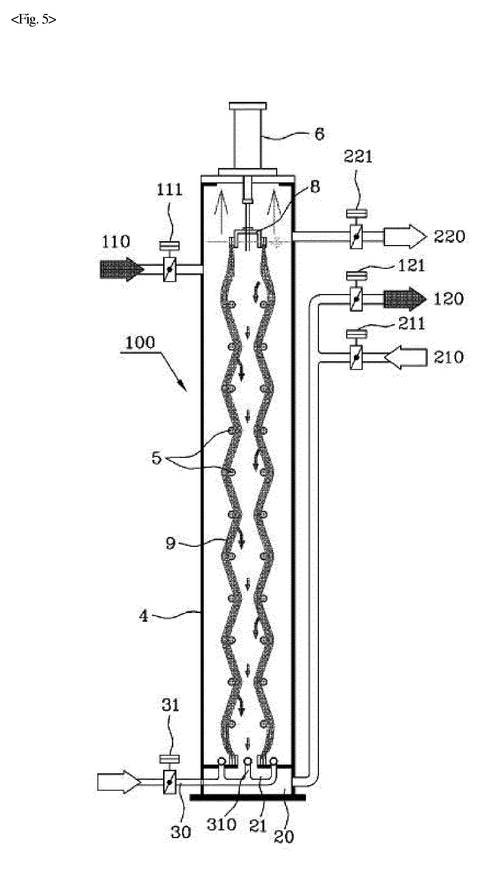

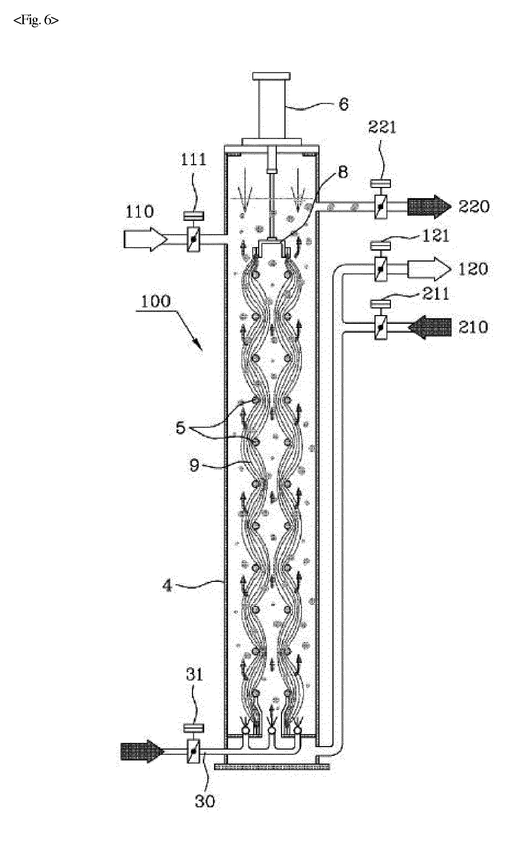

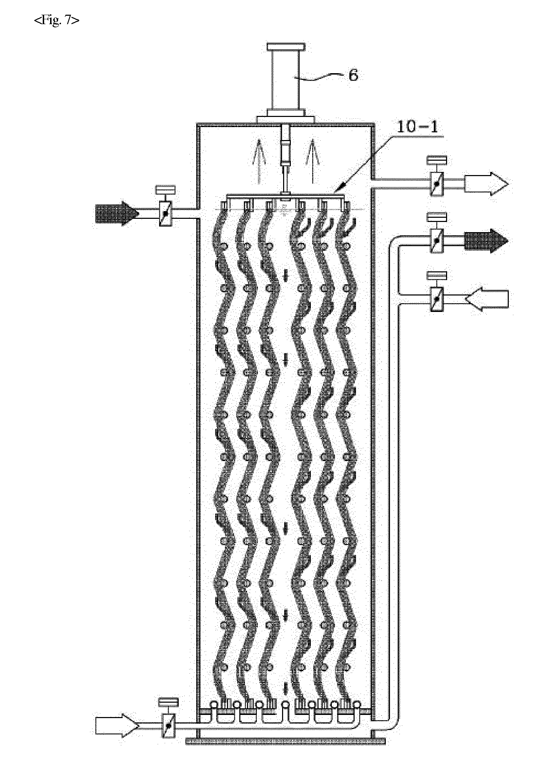

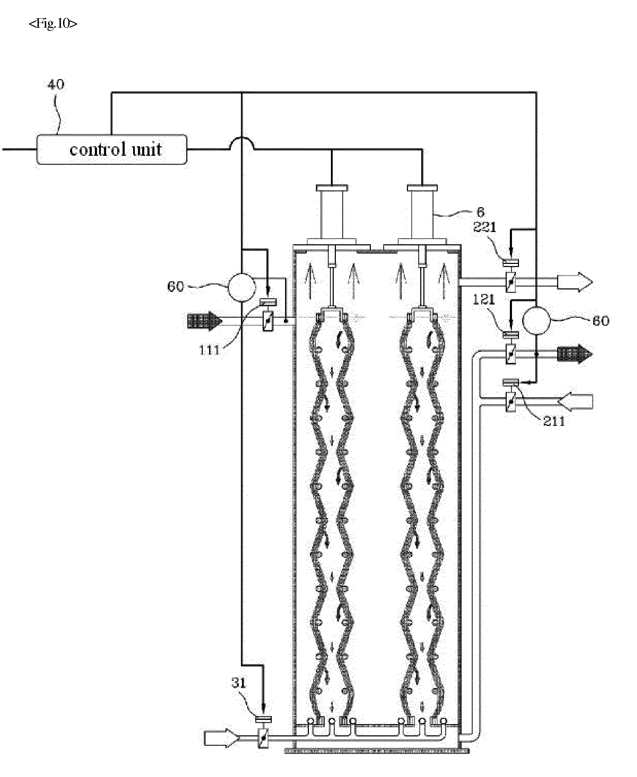

FIG. 1 is a side cross-sectional view showing the structure of a horizontal rod-supported, pore-controllable fiber media filter according to the present invention; FIG. 2 illustrates another embodiment of a horizontal rod-supported, pore-controllable fiber media filter according to the present invention; FIG. 3 is a front view of a horizontal rod-supported, pore-controllable fiber media filter according to the present invention; FIG. 4 is a side cross-sectional view showing the structure of a fiber media filter module formed by horizontal rod-supported, pore-controllable fiber media filters according to the present invention; FIG. 5 is a side cross-sectional view showing the structure of a horizontal rod-supported fiber filter system of the present invention in a filtration process; FIG. 6 is a side cross-sectional view showing the structure of a horizontal rod-supported fiber filter system of the present invention in a backwashing process; FIGS. 7 to 9 are side cross-sectional views showing the structure of a horizontal rod-supported fiber filter system according to another embodiment of the present invention; FIG. 10 shows the control structure of a horizontal rod-supported fiber filter system according to the present invention.

As shown in the figures, the present invention relates to a horizontal rod-supported, pore-controllable fiber media filter, a filter media filter module composed of the horizontal rod-supported, pore-controllable fiber media filter, and a horizontal rod-supported fiber filter system.

As shown in FIGS. 1 and 3, the horizontal rod-supported, pore-controllable fiber media filter comprises a fiber support 500, which comprises fixing supports 50 and horizontal rods 5, a fiber media 9 and an actuator 6.

The fiber support 500 is formed by placing the fixing supports 50 to stand at both sides and coupling both ends of the plurality of horizontal rods 5 to the fixing supports 50 at intervals in the vertical direction.

The horizontal rods 5 are generally placed at the same intervals as shown in the figures, but the intervals may also vary depending on the design object and the desired filtration level.

The fixing supports 50 are two plates serving as frames for supporting the horizontal rods 5.

The horizontal rods 5 are coupled to both ends of the fixing supports 50 at constant intervals in the vertical direction.

As shown in FIG. 3, the fiber support 500 formed as described above is a frame to which the horizontal rods 5 were coupled to form a structure, just like a ladder.

As shown in FIG. 1, a filter media 9 hangs on the horizontal rods of the fiber support 500 in a zigzag fashion, in which the lower end of the fiber media 9 forms a fixed end "A" at the lower end of the fiber support 500, and the upper end of the fiber support 9 forms a free end "B" at the upper end of the fiber support 500.

In other words, the fiber media 9 hangs on the horizontal rods 5 of the fiber support 500 in a zigzag fashion in a state in which one end thereof is fixed.

As shown in FIG. 3, the filter media 9 hangs in a zigzag fashion while completely filling the area formed by the horizontal rods 5, such that both sides are isolated from each other by a filter membrane formed by the filter media.

For this purpose, the filter medium 9 should have a planar structure, just like a wrapping cloth, such that it can form a filtration membrane.

In the present invention, an actuator 6 is a device which is coupled to the free end "B" of the fiber media 9 and serves to pull or relax the fiber media 9 supported by the fixed end "A".

Typical examples of the actuator 6 that performs this function include a cylinder illustrated in the figures, and it is to be understood that a combination of a motor and a gear can also perform the above function.

In the inventive horizontal rod-supported, pore-controllable fiber media filter having the above-described structure, when the actuator is driven to pull the fiber media 9, the fiber media 9 is pulled to form filtration pores while it is supported by the horizontal rods 5 of the fiber support 500 in a zigzag pattern, and when the actuator 6 is driven to relax the fiber media 9, the fiber media 9 is relaxed from the horizontal rods 5 of the fiber support 500 in a zigzag fashion to form backwashing pores.

The horizontal rod-supported, pore-controllable fiber media filter is supported by the horizontal rods 5 in the filtration and backwashing processes, and thus exhibits effects similar to those in the case in which unit fiber filter membranes fixed between the horizontal rods 5 are aligned in a line. Accordingly, the use thereof can provide a large-area fiber filter whose central portion is tightly attached.

Particularly, the horizontal rods 5 in the present invention hold a specific portion of the fiber media 9 even in the backwashing process, and thus the present invention exhibits an effect just like beating the laundry in the backwashing process of washing the fiber media 9 by injecting air, thereby greatly increasing the efficiency of backwashing.

As described above, the fiber support 500 enables the formation of a large-area fiber filter. Specifically, when the plurality of horizontal rods 5 are arranged in a zigzag pattern as shown in FIG. 2, the hanging length of the fiber filter 9 that hangs on the horizontal rods 5 is increased by the width of the zigzag, and thus a fiber filter having a larger area can be formed.

Accordingly, the present invention has an advantage in that the filtration capacity of the fiber media can be increased by controlling the horizontal intervals between the plurality of horizontal rods 5.

Meanwhile, the horizontal rods of the fiber support 500 support the fiber media 9 when the fiber media 9 is pulled or relaxed in a state in which it hangs as described above.

Thus, when the fiber media 9 is pulled or relaxed, a frictional force is generated on the horizontal rods 5. This frictional force shortens the lifespan of the fiber media 9 and interferes with controlling the pores of the fiber media 9.

In order to solve this problem, in the present invention, the horizontal rods 5 are rotatably coupled to the fixing supports 50 such that the support frictional force caused by the pulling and relaxation of the fiber media is absorbed into rotational motion.

In the embodiment shown in FIG. 3, rotatable coupling of the horizontal rods can be achieved by forming the horizontal rods 5 in the shape of cylindrical tubes, forming holes through the fixing supports 50, and inserting a fixing pin 51 into the horizontal rods 5. In addition to the embodiment shown in FIG. 3, many other embodiments can be used for the rotatable coupling of the horizontal rods.

The horizontal rod-supported, pore-controllable fiber media filter according to the present invention can be used by itself. For example, when the fiber media filter of FIG. 1 is placed in a filtration chamber into which raw water is introduced through one side (left side) and from which filtered water is discharged through the other side (right side), it can be widely used as a filtration device having the simplest structure.

In addition to this direct use, the present invention provides a method in which the horizontal rod-supported, pore-controllable fiber media filter is formed into a fiber media filter module 10 having an internal space as shown in FIG. 4.

As shown in FIG. 4, the fiber media filter module 10 is configured by disposing a pair of the fiber supports 500 having the fiber media hanging thereon in a line or placing them symmetrically, coupling the upper end of the fiber media 9 to an upper coupling cover connected to the actuator 6, and forming a drainage port 11 at the central portion of the module.

The fiber media filter module 10 provides a filter having a structure in which external raw water is filtered through the fiber media 9 and then discharged through the drainage port 11.

Herein, the fiber media filter module 10 may also be configured into a multi-stage fiber media filter module 10-1 (see FIG. 7) having a multi-layer fiber membrane by symmetrically placing disposing a plurality of pairs of the fiber supports 500 that support the fiber media or disposing the pairs of fiber supports in a line.

In the case of the multi-stage fiber media filter module 10-1, the effect of improving water quality can be improved, because external raw water is filtered several times through the multi-stage fiber membrane.

Particularly, in the multi-stage fiber media filter module 10-1, the fiber media can have different thicknesses between the pairs of the fiber supports, such that a deep filtration effect can be exhibited.

Specifically, when the thickness of the fiber media is thinner toward the inside of the multi-stage fiber media filter module, larger pollutant particles are filtered by fiber media closer to the outside, and smaller pollutant particles are filtered by fiber media closer to the inside. This greatly increases filtration efficiency.

In another aspect, the present invention provides a horizontal rod-supported fiber filter system in which the fiber media filter module 10 or 10-1 as shown in FIGS. 4 and 7 is used directly in a filter. The horizontal rod-supported fiber filter system is as follows.

As shown in FIG. 5, the horizontal rod-supported fiber filter system comprises a filtration chamber 100, which comprises a raw water inlet pipe 110, a backwashing water discharge pipe 220, a filtered-water discharge pipe 120 and a filtered-water drainage tub 20, a fiber media filter module 10, an air injection pipe 30, and a drainage pipe 22.

In the filtration chamber 100, the raw water inlet pipe 110 is formed at the upper portion of one side of the chamber 100, the backwashing water outlet pipe 220 separate from the raw water inlet pipe 110 is formed at the upper portion of the other side, and the filtered-water drainage tub 20 formed at the lower end of the chamber communicates with the filtered-water discharge pipe 120.

The fiber media filter module 10 is inserted in the filtration chamber 100, such that the actuator 6 of the fiber media filter module 10 is coupled to the upper end of the filtration chamber 100, and the drainage port 11 of the fiber media filter module 10 is coupled to communicate with the filtered-water drainage pipe 120.

By this coupling, a filter system is provided in which raw water introduced into the filter chamber 100 is filtered through the filter media 9 and then discharged through the drainage port 11.

To the fiber media filter module 10, an air injection pipe 30 is coupled in order to perform air washing in the backwashing process. Specifically, the air injection pipe 30 is formed in the filtered-water drainage tub 20 and has a plurality of branch pipes 310 which face the fiber media filter module 10. It is connected with an external air pump (not shown) such that it injects backwashing air as shown in FIG. 5 according to a control signal.

In the air injection pipe 30 in the present invention, the branch pipes 30 are arranged so as to inject air onto both sides of the fiber media 9. For this purpose, the branch pipes 310 also face the drainage port 11 of the fiber media filter module 10.

In the present invention, the drainage pipe 22 is connected to the filtered-water drainage tub 20 such that it discharges filtered water or introduces backwashing water according to a control signal.

The filtered-water discharge pipe 120 and the backwashing water inlet pipe 210, which are controlled by a control valve, are coupled to communicate with the drainage pipe 22. Thus, according to a control signal, the filtered-water discharge pipe 120 is open during filtration, and the backwashing water inlet pipe 210 is open during backwashing.

In the open and closed states of each control valve in FIGS. 5 to 10, the black arrow indicates an open pipe, and the white arrow indicates a closed pipe.

The horizontal rod-supported fiber filter system comprises a control unit for controlling the filtration process and the backwashing process and is operated by the control unit.

The filtration chamber 100 and the drainage pipe 22 are elements known prior to the filing date of the present invention. The position of the filtered-water discharge pipe 120 of the drainage pipe 22, which determines the level of raw water during filtration, or the position of the backwashing water discharge pipe 220 which determines the level of backwashing water during backwashing, and the control of control valves during filtration and backwashing, are determined according to the example of use of general filtration chambers. Thus, the control unit of the present invention also controls the filter in a general manner.

However, the present invention comprises a water quality measurement sensor which measures the degree of pollution of raw water or filtered water and transmits the measurement to the control unit.

As shown in FIG. 10, the control unit 40 has a circuit which is connected with a raw water inlet pipe control valve 111 for opening or closing the raw water inlet pipe 110, a backwashing water discharge pipe control valve 221 for opening or closing the backwashing water discharge pipe 220, and the water quality measurement sensor 60 which is placed in the filtration chamber 100 to measure the degree of pollution of raw water or filtered water. According to a signal about the internal condition of the filtration chamber, which is transmitted through the water quality measurement sensor 60, the control unit 40 generates a signal for controlling the driving of the raw water inlet pipe control valve 111, the backwashing water discharge pipe control valve 221, the actuator 6, the drainage pipe 22 or the air injection pipe 30.

In addition to a general on/off signal for the actuator, the control unit 40 outputs an actuator control signal according to a signal received from the water quality measurement sensor 60 during the filtration process such that the filtration pores of the fiber media maintain water quality standards, whereby the fiber filter system is automatically controlled.

In other words, water quality standards are input into the control unit 40, and when the water quality changes as a result of checking the state of filtered water in real time, the control unit 40 outputs a signal to the actuator to change the pores of the fiber media such that normal-state water quality can be achieved.

Whether the output state of the actuator is stepwise output or discrete output or linear output will be determined according to the desired design level of the filter.

According to the present invention having the above construction, as shown in FIG. 5, the actuator 6 pulls the fiber media 9 to form filtration pores, and when the raw water inlet pipe 10 opens and introduces raw water, the raw water is filtered through the fiber media filter module 10 and discharged through the filtered-water drainage tub 20 and the drainage pipe 22 to the filtered-water discharge pipe 120.

When the quality of raw material or filtered water in the filtration chamber 100 changes to reach the target signal value while the filtration process proceeds for a given time, the control unit 40 generates a backwashing process control signal.

When the backwashing process control signal is generated, as shown in FIG. 6, the actuator 6 relaxes the fiber media 9 to form filtration pores, the raw water inlet pipe 110 and the filtered-water drainage pipe 22 are closed, and the backwashing water inlet pipe 210, the backwashing water discharge pipe 220 and the air injection pipe 30 are closed to form a backwashing channel.

As shown in FIG. 6, backwashing water introduced from the backwashing water inlet pipe 210 is injected from the inside to the outside of the fiber media filter module 10 to wash the fiber media and then is discharged through the backwashing water discharge pipe. When the backwashing water washes the fiber media 9, the fiber media is vigorously shaken by air injected through the air injection pipe 30, thereby increasing the effect of washing the filter media.

Herein, the filter media 9 is restrained by the horizontal rods 5 due to the ladder-like structure of the fiber media filter module 10 of the present invention, whereby it is washed just like beating the laundry.

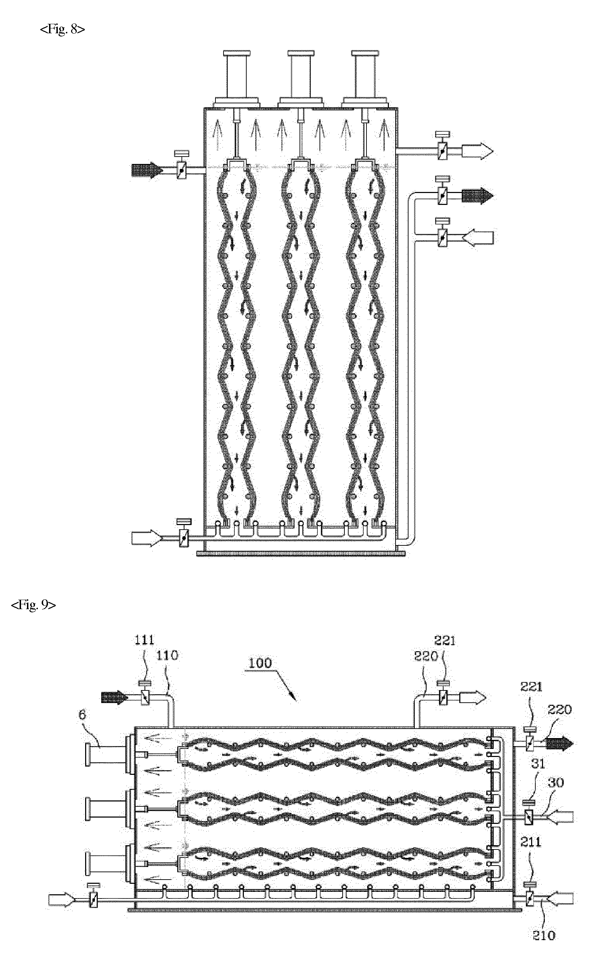

As shown in FIG. 7, the horizontal rod-supported fiber filter system as described above may comprise the multi-stage fiber media filter module 10-1, and thus may have a deep filtration effect. In addition, as shown in FIG. 8, a plurality of fiber media filter modules 10 may also be arranged in the filter chamber, whereby the filtration capacity thereof can be increased.

Meanwhile, as shown in FIG. 9, in the horizontal rod-supported fiber media filter system, the filter media filter module 10 may also be placed in the horizontal direction.

For this purpose, a filtration chamber 100 is provided in which the raw water inlet pipe 110 is formed at the upper end of one side of the chamber, the backwashing water discharge pipe 220 separate from the raw water inlet pipe 110 is formed at the upper end of the chamber, and the filtered-water drainage tub 20 communicating with the filtered-water discharge pipe 120 is formed on one sidewall of the chamber. In addition, the actuator 6 of the fiber media filter module 10 is coupled to the other sidewall of the filtration chamber 100, and the drainage port 11 is formed to communicate with the filtered-water discharge pipe 120.

In the filtered-water drainage tub 20, the air injection pipe 30 is formed such that a plurality of branch pipes 310 are formed so as to face both sides of the fiber media 9 of the fiber media filter module. In addition, the air injection pump 30 is connected with an external air pump (not shown) so as to inject backwashing air on the fiber media 9 according to a control signal.

Furthermore, the drainage pipe 22 is disposed and connected to the filtered-water drainage tube 20 so as to discharge filtered water or introduce backwashing water according to a control signal.

This filtration system in which the fiber media filter modules are placed in the horizontal direction may further comprise a separate bottom air injection pipe 30 which is formed at the bottom of the filtration chamber 100. The bottom air injection pipe 30 comprises a plurality of bottom branch pipes 310 facing the fiber media filter modules 10 and is connected to an external air pump.

In order to avoid interference with the fiber media 9, as shown in FIG. 9, the bottom air injection pipe 30 is preferably covered by a separate plate on the bottom of the filtration chamber such that the branch pipes 310 are exposed.

This horizontal rod-supported fiber filter system may also comprise a plurality of fiber media filter modules in order to increase the filtration capacity thereof. In this case, as shown in FIG. 9, the fiber media filter modules are arranged in a layer structure to reduce the installation space.

Control of the filtration and backwashing processes for this horizontal rod-supported fiber filter system is done according to the same principle as described above, except that the bottom air injection pipe is open during backwashing.

In this horizontal rod-supported fiber filter system, the operation of the control unit and the method of controlling pores using the actuator are the same as described above, and thus the description thereof will be omitted.

Although the preferred embodiments of the present invention have been disclosed for illustrative purposes with reference to the accompanying, those skilled in the art will appreciate that various modifications, additions and substitutions are possible, without departing from the scope and spirit of the invention as disclosed in the accompanying claims.

## Claims

1. A horizontal rod-supported, pore-controllable fiber media filter comprising:
a fiber support comprising fixing supports to stand at both sides thereof and a plurality of horizontal rods which are coupled rotatably to the fixing supports in a zigzag pattern at intervals in a lengthwise direction of the fixing supports;
a fiber media which hangs on the horizontal rods of the fiber support in a zigzag pattern, in which the lower end of the fiber media forms a fixed end attached to the lower end of the fiber support, and the upper end of the fiber media forms a free end at the upper end of the fiber support; and
an actuator which is coupled to the free end of the fiber media to pull or relax the fiber media supported by the fixed end,
the fiber media filter being configured such that, when the actuator is driven to pull the fiber media, the fiber media forms filtration pores while being supported by the horizontal rods of the fiber support in a zigzag pattern,
when the actuator is driven to relax the fiber media, the fiber media is relaxed in a zigzag pattern to form backwashing pores,
the filtration and backwashing capacities of the fiber media filter are determined by the horizontal intervals, and
the rotatable coupling to the fixing supports absorbs a frictional force, which is caused by the pulling and relaxation of the fiber media, and transforms the force into rotational motion.

2. The horizontal rod-supported, pore-controllable fiber media filter of claim 1, wherein the fiber media filter is configured into a fiber media filter module wherein a pair of the fiber supports on which the fiber media is hung are symmetrically placed or placed in a continuous line, and the upper end of the fiber media is coupled to an upper coupling cover connected with the actuator, and a drainage port is formed at the central portion of the lower end of the fiber media.

3. The horizontal rod-supported, pore-controllable fiber media filter of claim 2, wherein the fiber media filter module is configured into a multi-stage filter module having a multi-layer fiber membrane by symmetrically placing a plurality of pairs of the fiber supports having the fiber media hang thereon or placing the plurality of pairs of the fiber supports having the fiber media hang thereon in a continuous line.

4. The horizontal rod-supported, pore-controllable fiber media filter of claim 3, wherein the thickness of the fiber media of the symmetrical or linearly-placed fiber supports in the multi-stage filter module differs between the pairs of the fiber supports so as to show a deep filtration effect.

5. A horizontal rod-supported fiber filter system comprising:
a filtration chamber comprising a raw water inlet pipe formed at an upper end of one side of the chamber, a backwashing water discharge pipe separate from the raw water inlet pipe and formed at the upper end of one side of the chamber, and a filtered-water drainage tub that is formed at a lower end of the chamber so as to communicate with an upper end of a filtered-water discharge pipe;
a fiber media filter module of claim 2, which is placed in the filtration chamber so as to couple an actuator to the upper end of the filtration chamber and couple a drainage port to communicate with the filtered-water discharge pipe, such that raw water introduced into the filter chamber is filtered through a fiber media and then discharged through the drainage port;
an air injection pipe which is placed in the filtered-water drainage tub, and has a plurality of branch pipes facing the fiber media filter module, and is connected with an external air pump so as to inject backwashing air according to a control signal; and
a drainage pipe which is connected to the filtered-water drainage tub so as to discharge filtered water or introduce backwashing water according to a control signal.

6. The horizontal rod-supported fiber filter system of claim 5, wherein the branch pipes of the air injection pipe are arranged so as to inject air onto both sides of the fiber media.

7. The horizontal rod-supported fiber filter system of claim 6, wherein a plurality of the fiber media filter modules are arranged in the filtration chamber.

8. The horizontal rod-supported fiber filter system of claim 5, wherein the horizontal rod-supported fiber filter system comprises:
a control unit for controlling a filtration process and a backwashing process; and
a water quality measurement sensor which measures the degree of pollution of raw water or filtered water and transmits the measurement to the control unit,
whereby the fiber filter system is automatically controlled such that the control unit outputs an actuator control signal according to a signal from the water quality measurement sensor during the filtration process such that filtration pores of the fiber media maintain water quality standards.

9. A horizontal rod-supported fiber filter system comprising:
a filtration chamber comprising a raw water inlet pipe provided at an upper end of one side of the chamber, a backwashing water discharge pipe which is separate from the raw water inlet pipe and formed at the upper end of one side of the chamber, and a filtered-water drainage tub which is placed on one sidewall of the chamber so as to communicate with a filtered-water discharge pipe;
a fiber media filter module of claim 2, which is placed in the filtration chamber so as to couple an actuator to the upper end of the filtration chamber and couple a drainage port to communicate with the filtered-water discharge pipe, such that raw water introduced into the filter chamber is filtered through a fiber media and then discharged through the drainage port;
an air injection pipe which is placed in the filtered-water drainage tub, and has a plurality of branch pipes facing the fiber media filter module, and is connected with an external air pump so as to inject backwashing air according to a control signal;
a drainage pipe which is connected to the filtered-water drainage tub so as to discharge filtered water or introduce backwashing water according to a control signal; and
a bottom air injection pipe which is placed at the bottom of the filtration chamber, has a plurality of bottom branch pipes facing the fiber media filter module, and is connected with an external air pump.

10. The horizontal rod-supported fiber filter system of claim 9, wherein a plurality of the fiber media filter modules are arranged in a layer structure in the filtration chamber.

11. The horizontal rod-supported fiber filter system of claim 9, wherein the horizontal rod-supported fiber filter system comprises:
a control unit for controlling a filtration process and a backwashing process; and
a water quality measurement sensor which measures the degree of pollution of raw water or filtered water and transmits the measurement to the control unit,
whereby the fiber filter system is automatically controlled such that the control unit outputs an actuator control signal according to a signal from the water quality measurement sensor during the filtration process such that the filtration pores of the fiber media maintain water quality standards.
